Europäisches Patentamt

European Patent Office

Office européen des brevets

(11) Publication number: **0 346 908**
**A2**

# EUROPEAN PATENT APPLICATION

(21) Application number: **89110904.3**

(51) Int. Cl.⁴: **A23K 1/20 , A23K 1/16**

(22) Date of filing: **15.06.89**

(30) Priority: **16.06.88 FI 882900**

(43) Date of publication of application:
**20.12.89 Bulletin 89/51**

(84) Designated Contracting States:
**AT BE CH DE ES FR GB GR IT LI LU NL SE**

(71) Applicant: **CULTOR OY**
**P.O. Box 105**
**SF-00241 Helsinki(FI)**

(72) Inventor: **Haikkala, Pirkko**
**Merivalkama 3-5 B 19**
**SF-02320 Espoo(FI)**
Inventor: **Holm, Jan-Olof**
**1360 N. Lake Shore Drive**
**Chicago, III. 60610(US)**

(74) Representative: **Neidl-Stippler, Cornelia, Dr.**
**Neidl-Stippler & Partner Rauchstrasse 2**
**D-8000 München 80(DE)**

(54) **Animal feed and procedure for granulating same.**

(57) Animal feed containing sodium gluconate 0.1 to 8% by weight, and a procedure for pelletizing feed, for pelletizing agent being used 0.1 to 8% by weight sodium gluconate.

EP 0 346 908 A2

## ANIMAL FEED AND PROCEDURE FOR PELLETIZING SAME

The invention concerns an animal feed which contains sodium salts. Furthermore the invention concerns a procedure for pelletizing animal feed containing sodium salts, pelleting agent being added to the feed and the feed being pelleted by forcing it through a matrix.

Nowadays, animal feeds are principally pelletized because of the convenient handling, good storing quality and good dispensability of pelleted feeds. Pelleting is accomplished in a pelletizer, for instance a collar type, extruder type pelletizer based on briquetting, or with another pelletizer known in the art. It is usual in connection with briquetting to add a special pelletizing agent to the feed, in order to improve the pelleting tendency of the feed and to improve the characteristics of the pellets, e.g. with a view to achieving desired hardness, solubility and other characteristics. A bonding agent is used for pelletizing agent, e.g. Ca lignosulphonates, glue substances or other like bonding agents.

Certain drawbacks are associated with lignosulphonate in feed pelletizing. However extensive the use of lignosulphonates in feed pelleting, these substances on one hand have no food value to animals and on the other hand they have no positive effect on the nutritional properties of the feed, although they are not harmful in themselves.

Another important problem with which the invention is associated is the use of sodium in animal feeds and the addition of sodium to certain feeds. Laying hens in particular need sodium in ample amount, sodium being important in forming the egg shell. Therefore feed raw materials rich in sodium are added to poultry feeds. The sodium sources used are, for instance, salt (NaCl), sodium bicarbonate ($NaHCO_3$) and sodium sulphate ($Na_2SO_4$). Salt is favourable in price, but the chlorine which it contains impairs the strength of the egg shell. For this reason part of the sodium is supplied e.g. in the form of sodium bicarbonate or sodium sulphate. However, sodium bicarbonate and sodium sulphate are more expensive and their use implies increased feed manufacturing costs.

Feed raw materials containing sodium must likewise be added to feeds intended for other animals as well, in order to meet the sodium requirements of these animals.

Adding sodium e.g. to poultry feeds and to other feeds in the form of inorganic salts does not add to the nutritive value of the feed; moreover, ample use of inorganic salts in feeds may be harmful to the animals.

The object of the present invention is to eliminate the drawbacks mentioned.

The specific object of the invention is to provide a feed in which the pelleting agent which it contains has a food value, i.e., possesses nutritive value as an energy source for the animals.

It is a further object of the invention to provide a feed which contains sodium salts in ample amount and in which the sodium salts are present in a form other than inorganic.

It is a further object of the invention to provide a feed which contains sodium salts and in the case of which the sodium salts used in its manufacturing is favourable in price and contains organic nutrients.

It is a further object of the invention to provide a feed in which the sodium which it contains is in a form more suitable for hens than sodium chloride, particularly as regards its properties having an influence on the strength of the egg shell.

It is a further object of the invention to provide a procedure, and particularly a pelleting agent for feeds which contains sodium salts in ample amount.

Regarding the features which are characteristic of the invention, reference is made to the claims section.

The invention is based on the fundamental idea that the feed contains sodium gluconate, that is, to the feed is added a novel feed raw material containing energy, namely, sodium gluconate.

Sodium gluconate is being manufactured in large quantities by fermentation. The sodium gluconate is crystallized upon separation of sodium gluconate and cells. The mother liquor obtained in the crystallizing process contains sodium gluconate and other sodium salts of organic acids, certain neutral substances and sugars. It has unexpectedly been found in research and experiments now carried out that said sodium gluconate mother liquor is eminently suitable to be used as a feed additive, owing to the sodium gluconate, organic sodium salts, sugars and certain neutral substances which it contains, and in addition owing to certain other favourable characteristics which it presents.

The calculated energy content of sodium gluconate is on the order of more than 10 MJ/kg, e.g. about 12 MJ/kg.

It has further been found in the research that the mother liquor formed in connection with sodium gluconate crystallizing, which contains in ample amount sodium gluconate, sodium salts of organic acids, certain neutral substances and certain sugars, is eminently suited to be used as pelletizing agent.

2

When sodium gluconate mother liquor is used for pelletizing agent, there is no absolute need to add any other pelletizing agent. At the same time, the energy content and some other characteristics of the feed improve.

Furthermore, when sodium gluconate mother liquor is used, the NaCl salt and sodium bicarbonate may be totally omitted from poultry feed, whereby the shell strength increases.

The feed of the invention contains sodium gluconate 0.1 to 8% by weight, suitably 0.5 to 5% by weight, e.g. 2 to 5% by weight. The feed may in addition contain sodium salts of organic acids, such as sodium citrate, sodium oxalate, sodium lactate, sodium acetate, sodium fumarate and sodium succinate, and possibly other sodium salts derived from the sodium gluconate manufacturing process; the total quantity of said salts may be e.g. 0 to 70% by weight, for instance 30 to 70% by weight, suitably 40 to 60% by weight, calculated on the sodium gluconate quantity. The feed may further contain neutral substances derived from the sodium gluconate manufacturing process, e.g. sorbitol,erythritol and/or glycerol, in total quantity e.g. 0 to 20% by weight, suitably 10 to 20% by weight, calculated on the total sodium gluconate quantity. The feed may further contain e.g. sugars, such as fructose, glucose, saccharose, trisaccharides, etc., e.g. 0 to 20% by weight, suitably 10 to 20% by weight, calculated on the total sodium gluconate quantity.- All percentages in this application and in the claims are stated as calculated on the dry matter.

Sodium gluconate solution is understood to mean sodium gluconate solution and/or sodium gluconate mother liquor obtained at sodium gluconate crystallization in connection with any sodium gluconate manufacturing process whatsoever.

The sodium gluconate is conveniently obtained in connection with the sodium gluconate manufacturing process, for instance with glucose for raw material, for instance with Aspergillus niger for production strain. Obviously sodium gluconate derived from another process and/or fermented with the aid of another microbe strain may be equally employed. When the mould Aspergillus niger is used, fermentation is implemented in conventional manner, using e.g. lye for neutralizing agent. The fermentation process is known in the art in itself and shall not be more closely described in this context. After the fermentation process the cells are filtered off, whereby a sodium gluconate solution is left, with dry matter content e.g. on the order of 50% by weight, from which the pure sodium gluconate is crystallized out. The residual sodium gluconate mother liquor from the crystallizing, which contains an ample quantity of sodium gluconate, e.g. about 50% by weight, sodium ·salts of organic acids e.g. about 20 to 30% by weight, some neutral substances and some sugars e.g. about 5 to 10% by weight may thereafter be mixed with feed raw materials and pelleted in a way known in itself in the art. Obviously pure sodium gluconate may equally be used in the feed.

Pelletizing may be performed e.g. with a socalled collar type pelletizer and/or with an extruder type granulator and/or a pelletizer based on briquetting, or by any other briquetting method known in itself in the art. Pelletizing processes are known in the art in themselves and shall not be more closely described in this context.

According to research work that has been done, sodium gluconate and/or the other sodium salts of organic acids, neutral substances and sugars presented in the foregoing are particularly well suited for use in combination with feeds for poultry, especially laying hens, e.g. in combination with whole feeds on account of their high sodium content and because they contain little chlorine, which weakens the shell. However, sodium gluconate and the other substances mentioned may also be used in combination with feeds and whole feed mixtures meant for pigs and/or cattle or other animals, and the present invention concerns such feeds as well.

When sodium gluconate is used in the feed as taught by the invention, the need of calcium lignosulphonate, previously commonly used as binding agent, e.g. in connection with feed pelletizing, is reduced, or can be omitted. Hereby certain physiological drawbacks are avoided which calcium lignosulphonate has. Furthermore, thanks to the invention, no sodium chloride, sodium bicarbonate and/or sodium sulphate is needed, which may be left out or used in the feed in smaller quantity than before.

Furthermore, the food value of the feed is improved thanks to the invention.

The invention is described in detail in the following with the aid of embodiment examples, which are only intended to illustrate the invention.

Example 1, Trial with hens

In the test, three groups of laying hens (460 hens per group) were given feeds of different energy level during 28-day periods 1 - 3. The energy level of feed No. 1 was 10.5 ME MJ/kg, the energy level of feed No. 2 was 10.8 NE MJ/kg and the energy level of feed No. 3 was 8.5 ME MJ/kg. In feeds No. 1 and 2 commercial calcium lignosulphonate was used for pelleting agent at 1.5% by weight, while in feed No. 3

3

sodium gluconate mother liquor prepared as described in Example 2 was used at 1.5% by weight dry matter. The following parameters were determined in the test: egg-laying percentage (Egg %), egg weight (Egg, g) egg yield per hen (Yield, g/day), feed intake per hen (Cons., g/day), efficiency of the feed (consumption/yield) (Effic., kg/kg), and cracking of the eggs (Crack %). Feed No. 3 contained 20% ground oat husks which had very poor pelleting properties; in the test sodium gluconate caused good binding of the pellets.

Table 1

| Trial with hens | | | | | | | |
|---|---|---|---|---|---|---|---|
| Feed No. | Period | Egg % | Egg g | Yield, g/day | Cons., g/day | Eff., kg/kg | Crack % |
| 1 | 1 | 42.3 | 46.6 | 19.7 | 100.5 | 5.09 | 6.3 |
|   | 2 | 90.6 | 51.1 | 46.3 | 105.8 | 2.29 | 5.1 |
|   | 3 | 91.1 | 53.5 | 48.8 | 112.1 | 2.29 | 5.4 |
| 2 | 1 | 43.4 | 46.1 | 20.0 | 94.6 | 4.72 | 4.5 |
|   | 2 | 90.7 | 50.4 | 45.7 | 99.8 | 2.18 | 5.0 |
|   | 3 | 91.3 | 53.7 | 49.0 | 105.6 | 2.15 | 4.9 |
| 3 | 1 | 44.1 | 45.7 | 20.1 | 96.8 | 4.80 | 3.9 |
|   | 2 | 88.7 | 49.7 | 44.1 | 106.4 | 2.41 | 4.0 |
|   | 3 | 87.9 | 52.6 | 46.3 | 116.0 | 2.50 | 3.8 |

Feed according to the present invention, containing 1.5% sodium gluconate, was given to the hens with feed No. 3 during feeding periods 1 - 3. As the results show, the efficiency of the feed was rather high, and the cracking of the eggs was low.

Example 2, Manufacturing sodium gluconate

Glucose is used for raw material, and Aspergillus niger for production strain. Fermentation is carried out in a manner known in itself in the art. lye is used for neutralizer, sodium gluconate is formed at neutralizing. The cells are filtered out, leaving a sodium gluconate solution, from which the sodium gluconate can be crystallized. The sodium gluconate mother liquor obtained on crystallizing may be used for feed preparation as such; one may also in the feed manufacturing use the sodium gluconate which is obtained or the solution obtained in the fermenting process, which presents a sodium gluconate purity of 95 to 97%, calculated on the dry matter.

The approximate contents of the sodium gluconate mother liquor are presented in the table below, based on process control analyses for sodium gluconate. sodium citrate, sodium oxalate, sugars and total dry matter, performed in the course of several months; in other respects the results are based on random samples. The quantities of sodium lactate, sodium acetate, sodium fumarate and sodium succinate vary widely, and these substances are metabolic products of the microbes.

4

Table 2

| The sodium gluconate mother liquor | |
|---|---|
| Dry matter content (Karl-Fischer) | abt. 50% |
| Contents of the dry matter: | |
| Sodium gluconate | abt. 50% |
| Salts of organic acids; | |
| Sodium citrate<br>Sodium oxalate<br>Sodium lactate<br>Sodium acetate<br>Sodium fumarate<br>Sodium succinate<br>Total | 1 to 7%<br>abt. 0.5 to 2.5%<br><br><br><br><br>abt. 20 to 30% |
| Neutral substances, e.g.: | |
| Sorbitol<br>Erythritol<br>Glycerol<br>Total | <br><br><br>abt. 5 to 10% |
| Sugars: | |
| Fructose<br>Glucose<br>Saccharose<br>Trisaccharides<br>Total<br>Chloride<br>Sulphate<br>pH | <br><br><br><br>abt. 6 to 10%<br>200 ppm<br>400 ppm<br>7 to 10 |

Example 3

A feed intended for broilers contains:

| | |
|---|---|
| Fish meal | 3.5% |
| Soya bean meal | 19.3 |
| Fat | 2.7% |
| Wheat | 20.0% |
| Barley | 18.8% |
| Dehulled oats | 30% |
| Grass meal | 1% |
| Feed phosphate | 1.8% |
| Ground limestone | 0.6% |

and magnesium oxide, zinc oxide, manganese bicarbonate, iron sulphate, copper oxide, cobalt carbonate, fodder yeast and vitamin mix. For pelletizing agent is added: (1) 0.5% by weight, (2) 2.0% by weight, and (3) 5% by weight sodium gluconate.

Example 4

Pelletized complete feed meant for laying hens contains:

| | |
|---|---|
| Milk powder | 1.0% |
| Fish meal | 4.5% |
| Meat/bone meal | 3.0% |
| Soya bean meal | 8.5% |
| Fat | 2.5% |
| Wheat | 8.0% |
| Barley | 28.6% |
| Oat | 30.0% |
| Grass meal | 4.0% |
| Algal concentrate | 0.5% |
| Feed phosphate | 0.5% |
| Limestone (chicken quality) | 3.3% |
| Oyster shells | 3.3% |

and magnesium oxide, zinc oxide, copper oxide, manganese carbonate, cobalt carbonate, fodder yeast and vitamin mix. For pelletizing the feed is used: (1) 0.1% by weight, (2) 2.5% by weight, (3) 6% by weight, and (4) 8% by weight (dry matter) sodium gluconate mother liquor of Example 2.

## Example 5

Whole feed for pigs contains:

| | |
|---|---|
| Milk powder | 1.2% |
| Fish meal | 4.5% |
| Meat/bone meal | 2.5% |
| Soya bean meal | 6.1% |
| Turnip rape cake | 1.5% |
| Mixed molasses | 2.0% |
| Barley | 65.3% |
| Oat | 15.0% |
| Monocalcium phosphate | 0.8% |
| Ground limestone | 0.3% |

and magnesium oxide, zinc oxide, iron sulphate, manganese carbonate, copper oxide, cobalt carbonate, calcium iodate, and vitamin mix. For pelletizing the feed is used: (1) 2% by weight, and/or (2) 4% by weight sodium gluconate mother liquor, as presented in Example 2.

## Example 6

Feed meant to be dispensed to calves together with skim milk or milk powder contains:

| | |
|---|---|
| Fat | 25% by weight |
| Fodder yeast | 3.0% by weight |
| Soya bean meal | 3.0% by weight |
| Grass meal | 55% |
| Wheat bran | 10% |
| Fodder phosphate | 1.6% |

and zinc oxide, copper oxide, iron sulphate, calcium iodate, and vitamin mix in the green meal. To the feed are added 1.5% sodium gluconate mother liquor (dry matter) as in Example 2.

Example 7

Complete feed for high-yielding dairy cows contains:

| Milk powder | 3.0% |
|---|---|
| Turnip rape cake | 23.5% |
| Draff feed | 6.0% |
| Fat | 4.5% |
| Mixed molasses | 5.0% |
| Molassed pulp | 6.0% |
| Wheat bran | 10.0% |
| Grass meal | 2.0% |
| Barley | 17.5% |
| Oat | 15.0% |
| Fodder phosphate | 1.5% |
| Ground limestone | 2.9% |

and trace elements and vitamins. The feed mix is pelleted in a collar type feed pelletizer, and in the pelletizing process is used 3% by weight sodium gluconate mother liquor as in Examples 3 to 5.

**Claims**

1. Animal feed containing sodium salts in ample amount, characterized in that the feed contains sodium gluconate 0.1 to 8% by weight, suitably 0.5 to 5% by weight.

2. Feed according to claim 1, characterized in that the feed contains sodium salts of organic acids.

3. Feed according to claim 2, characterized in that the feed contains sodium citrate, sodium oxalate, sodium lactate, sodium acetate, sodium fumarate and/or sodium succinate 30 to 70% by weight, suitably 40 to 60% by weight, calculated on the sodium gluconate quantity.

4. Feed according to any one of claims 1 to 3, characterized in that the feed contains sodium gluconate solution obtained in connection with sodium gluconate fermentation and/or sodium gluconate mother liquor obtained at sodium gluconate crystallization.

5. Feed according to claim 4, characterized in that the feed has pellet configuration and that it contains as pelleting agent mainly sodium gluconate solution.

6. Feed according to any one of claims 1 to 5, characterized in that the sodium contained in the feed os mainly present in the form of sodium gluconate, sodium citrate, sodium oxalate, sodium lactate, sodium acetate, sodium fumarate and/or sodium succinate.

7. Procedure for pelleting animal feed containing sodium salts in ample quantity, wherein to the feed is adding a pelleting agent and the feed is pelletized by pressing it through a matrix, characterized in that for pelleting agent is used 0.1 to 8% by weight, suitably 0.5 to 5% by weight sodium gluconate.

8. Procedure according to claim 7, characterized in that for pelletizing agent are mainly used sodium gluconate and sodium salts of organic acids, such as sodium citrate, sodium oxalate, sodium lactate, sodium acetate, sodium fumarate and/or sodium succinate.

9. The use of sodium gluconate for feed raw material at concentration 0.1 to 8% by weight, suitably 0.5 to 5% by weight.

10. The use according to claim 9 of sodium gluconate as an animal feed pelletizing agent.

11. The use of mother liquor obtained in a sodium gluconate fermentation process for feed raw material.